(19) Europäisches Patentamt
European Patent Office
Office européen des brevets

(11) **EP 3 165 753 A1**

(12) **EUROPEAN PATENT APPLICATION**

(43) Date of publication:
**10.05.2017 Bulletin 2017/19**

(51) Int Cl.:
*F02K 3/06* (2006.01)  *F02K 3/072* (2006.01)
*F02C 3/107* (2006.01)  *F02C 7/06* (2006.01)

(21) Application number: **16196927.4**

(22) Date of filing: **02.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.11.2015 US 201514933440**

(71) Applicant: **United Technologies Corporation
Farmington, CT 06032 (US)**

(72) Inventors:
• **SCHWARZ, Frederick M.
Glastonbury, CT 06033 (US)**
• **GLAHN, Jorn A.
Manchester, CT 06042 (US)**

(74) Representative: **Hull, James Edward
Dehns
St. Bride's House
10 Salisbury Square
London
EC4Y 8JD (GB)**

(54) **GAS TURBINE ENGINE WITH MOUNT FOR LOW PRESSURE TURBINE SECTION**

(57) A turbine section (28) of a gas turbine engine (20) includes a first turbine section (46) and a second turbine section (54). The first turbine section (46) has a first exit area (401) and rotates at a first speed. The second turbine section (54) has a second exit area (400) and rotates at a second speed. A first performance quantity is defined as the product of the first speed squared and the first exit area (401). A second performance quantity is defined as the product of the second speed squared and the second exit area (400).

FIG.3

**Description**

**BACKGROUND OF THE INVENTION**

This application relates to a gas turbine engine wherein the low pressure turbine section is rotating at a higher speed and centrifugal pull stress relative to the high pressure turbine section speed and centrifugal pull stress than prior art engines.

Gas turbine engines are known, and typically include a fan delivering air into a low pressure compressor section. The air is compressed in the low pressure compressor section, and passed into a high pressure compressor section. From the high pressure compressor section the air is introduced into a combustion section where it is mixed with fuel and ignited. Products of this combustion pass downstream over a high pressure turbine section, and then a low pressure turbine section.

Traditionally, on many prior art engines the low pressure turbine section has driven both the low pressure compressor section and a fan directly. As fuel consumption improves with larger fan diameters relative to core diameters it has been the trend in the industry to increase fan diameters. However, as the fan diameter is increased, high fan blade tip speeds may result in a decrease in efficiency due to compressibility effects. Accordingly, the fan speed, and thus the speed of the low pressure compressor section and low pressure turbine section (both of which historically have been coupled to the fan via the low pressure spool), have been a design constraint. More recently, gear reductions have been proposed between the low pressure spool (low pressure compressor section and low pressure turbine section) and the fan.

**SUMMARY**

A turbine section of a gas turbine engine according to an example of the present disclosure includes a first turbine section and a second turbine section. The first turbine section has a first exit area and rotates at a first speed. The second turbine section has a second exit area and rotates at a second speed, which is faster than the first speed. A first performance quantity is defined as the product of the first speed squared and the first exit area. A second performance quantity is defined as the product of the second speed squared and the second exit area. A ratio of the first performance quantity to the second performance quantity is between about 0.5 and about 1.5. The first turbine section is supported on two bearings, with a first bearing mounted in a mid-turbine frame that is positioned intermediate the first turbine section and the second turbine section, and a second bearing mounting the first turbine section, with the second bearing having a support extending downstream of the first turbine section. The second turbine has an inlet and is supported on a third bearing aft of the inlet.

In a further embodiment of any of the forgoing embodiments, the ratio is above or equal to about 0.8.

In a further embodiment of any of the forgoing embodiments, the third bearing is situated in the mid-turbine frame.

In a further embodiment of any of the forgoing embodiments, the first and third bearings are situated between the first and second exit areas.

In a further embodiment of any of the forgoing embodiments, the first turbine section has between three and six stages. The second turbine section has between one and two stages.

In a further embodiment of any of the forgoing embodiments, a pressure ratio across the first turbine section is greater than about 5:1.

A gas turbine engine according to an example of the present disclosure includes a fan having one or more fan blades, a compressor section in fluid communication with the fan, and a turbine section in fluid communication with the compressor section. The turbine section includes a first turbine section and a second turbine section. The first turbine section has a first exit area at a first exit point and rotates at a first speed. The second turbine section has a second exit area at a second exit point and rotates at a second speed, which is faster than the first speed. A first performance quantity is defined as the product of the first speed squared and the first exit area. A second performance quantity is defined as the product of the second speed squared and the second exit area. A ratio of the first performance quantity to the second performance quantity is less than or equal to about 1.5. The first turbine section is supported on two bearings, with a first bearing mounted in a mid-turbine frame that is positioned intermediate the first turbine section and the second turbine section, and a second bearing mounting the first turbine section, with the second bearing supported in an exhaust case downstream of the first turbine section. The second turbine has an inlet and is supported on a third bearing aft of the inlet.

In a further embodiment of any of the forgoing embodiments, the ratio is above or equal to about 0.8.

In a further embodiment of any of the forgoing embodiments, the third bearing is situated in the mid-turbine frame, and the first and third bearings are situated between the first and second exit areas.

In a further embodiment of any of the forgoing embodiments, the compressor section includes a first compressor section and a second compressor section. The first turbine section and the first compressor section rotate in a first direction, and the second turbine section and the second compressor section rotate in a second opposed direction.

In a further embodiment of any of the forgoing embodiments, a gear reduction is included between the fan and a low spool driven by the first turbine section such that the fan rotates at a lower speed than the first turbine section, and a gear ratio of the gear reduction is greater than about 2.3.

In a further embodiment of any of the forgoing embodiments, the fan rotates in the second opposed direction.

In a further embodiment of any of the forgoing embodiments, each of the first and second turbine sections is configured to rotate in a first direction.

In a further embodiment of any of the forgoing embodiments, the ratio is above or equal to about 1.0.

In a further embodiment of any of the forgoing embodiments, the fan delivers a portion of air into a bypass duct, and a bypass ratio is defined as the portion of air delivered into the bypass duct divided by the amount of air delivered into the compressor section, with the bypass ratio being greater than about 10.0.

In a further embodiment of any of the forgoing embodiments, the fan has twenty six or fewer fan blades. The fan defines a pressure ratio less than about 1.45.

In a further embodiment of any of the forgoing embodiments, the compressor section includes a first compressor section coupled to the first turbine section and a second compressor section coupled to the second turbine section. The first compressor section includes fewer stages than the second compressor section.

A method of designing a gas turbine engine according to an example of the present disclosure includes providing a fan, providing a compressor section in fluid communication with the fan, and providing a turbine section, including both a first turbine section and a second turbine section. The first turbine section is supported on two bearings, with a first bearing mounted in a mid-turbine frame that is positioned intermediate the first turbine section and the second turbine section, and a second bearing mounting the first turbine section, with the second bearing supported in an exhaust case downstream of the first turbine section. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area at a predetermined design target. A second performance quantity is defined as the product of the second speed squared and the second area at the predetermined design target. A ratio of the first performance quantity to the second performance quantity is between about 0.5 and about 1.5.

In a further embodiment of any of the forgoing embodiments, the predetermined design target corresponds to a takeoff condition.

In a further embodiment of any of the forgoing embodiments, the compressor section includes a first compressor section and a second compressor section, an overall pressure ratio is provided by the combination of a pressure ratio across the first compressor and a pressure ratio across the second compressor at the predetermined design target, and the overall pressure ratio is greater than or equal to about 35.

These and other features can be best understood from the following specification and drawings, the following which is a brief description.

## BRIEF DESCRIPTION OF THE DRAWINGS

Figure 1 shows a gas turbine engine.
Figure 2 schematically shows the arrangement of the low and high spool, along with the fan drive.
Figure 3 shows a mounting feature.

## DETAILED DESCRIPTION

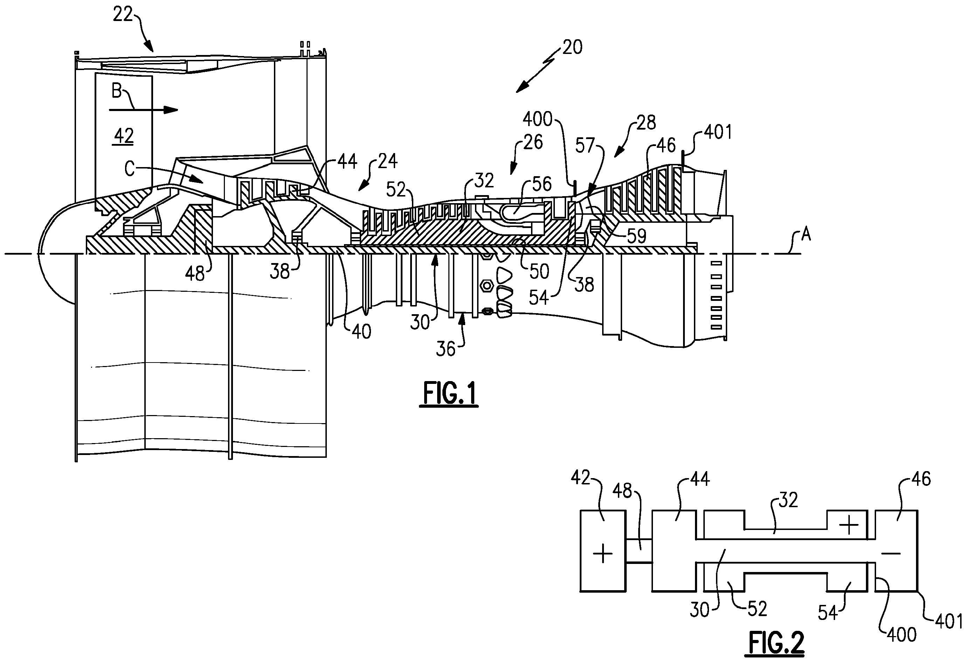

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure (or first) compressor section 44 and a low pressure (or first) turbine section 46. The inner shaft 40 is connected to the fan 42 through a geared architecture 48 to drive the fan 42 at a lower speed than the low speed spool 30. The high speed spool 32 includes an outer shaft 50 that interconnects a high pressure (or second) compressor section 52 and high pressure (or second) turbine section 54. A combustor 56 is arranged between the high pressure compressor section 52 and the high pressure turbine section 54. A mid-turbine frame 57 of the engine static structure 36 is arranged generally between the high pressure turbine section 54 and the low pressure turbine section 46. The mid-turbine frame 57 further supports bearing systems 38 in the turbine section 28. As used herein, the high pressure turbine section experiences higher pressures than the low pressure turbine section. A low pressure turbine section is a section that powers a fan 42.

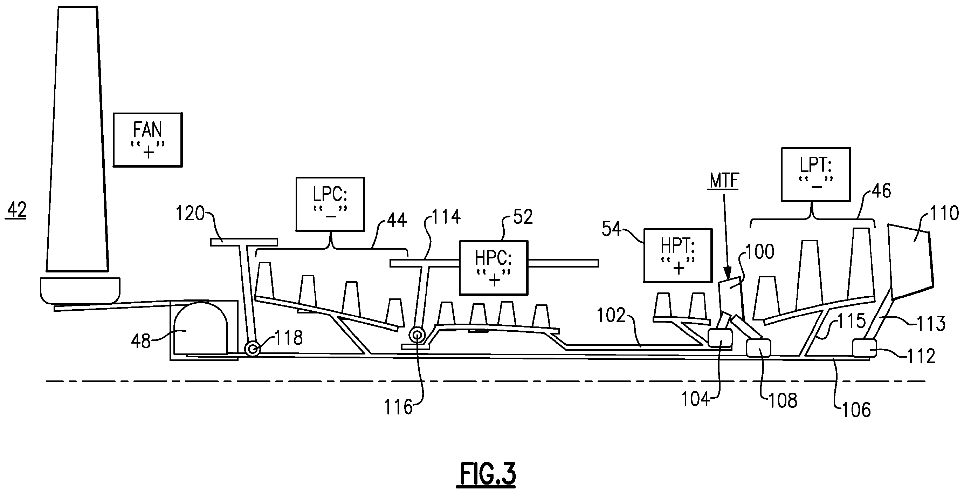

In the illustrated example, the low (or first) pressure compressor 44 includes fewer stages than the high (or second) pressure compressor 52, and more narrowly, the low pressure compressor 44 includes three stages and the high pressure compressor 52 includes eight stages (Figure 1). In another example, the low pressure compressor 44 includes four stages and the high pressure compressor 52 includes four stages (Figure 3). In the illustrated example, the high (or second) pressure turbine 54 includes fewer stages than the low (or first) pressure turbine 46, and more narrowly, the low pressure turbine 46 includes five stages, and the high pressure turbine 54 includes two stages. In one example, the low pressure turbine 46 includes three stages, and the high pressure turbine 54 includes two stages (Figure 3).

The inner shaft 40 and the outer shaft 50 are concentric and rotate via bearing systems 38 about the engine central longitudinal axis A which is collinear with their longitudinal axes. The high and low spools can be either co-rotating or counter-rotating.

The core airflow C is compressed by the low pressure compressor section 44 then the high pressure compressor section 52, mixed and burned with fuel in the combustor 56, then expanded over the high pressure turbine section 54 and low pressure turbine section 46. The mid-turbine frame 57 includes airfoils 59 which are in the core airflow path. The turbine sections 46, 54 rotationally drive the respective low speed spool 30 and high speed spool 32 in response to the expansion.

The engine 20 in one example is a high-bypass geared aircraft engine. The bypass ratio is the amount of air delivered into bypass path B divided by the amount of air into core path C. In a further example, the engine 20 bypass ratio is greater than about six and less than about thirty, or more narrowly less than about twenty, with an example embodiment being greater than ten, the geared architecture 48 is an epicyclic gear train, such as a planetary gear system or other gear system, with a gear reduction ratio of greater than about 2.3 and the low pressure turbine section 46 has a pressure ratio that is greater than about five. In some embodiments, the gear reduction ratio is less than about 5.0, or less than about 4.0. In one disclosed embodiment, the engine 20 bypass ratio is greater than about ten, the fan diameter is significantly larger than that of the low pressure compressor section 44, and the low pressure turbine section 46 has a pressure ratio that is greater than about 5:1. In some embodiments, the high pressure turbine section may have two or fewer stages. In contrast, the low pressure turbine section 46, in some embodiments, has between 3 and 6 stages. Further the low pressure turbine section 46 pressure ratio is total pressure measured prior to inlet of low pressure turbine section 46 as related to the total pressure at the outlet of the low pressure turbine section 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ("TSFC"). TSFC is the industry standard parameter of the rate of lbm of fuel being burned per hour divided by lbf of thrust the engine produces at that flight condition. "Low fan pressure ratio" is the ratio of total pressure across the fan blade alone, before the fan exit guide vanes. The low fan pressure ratio as disclosed herein according to one non-limiting embodiment is less than about 1.45. "Low corrected fan tip speed" is the actual fan tip speed in ft/sec divided by an industry standard temperature correction of $[(\text{Tram }°R) / (518.7 °R)]^{0.5}$ (where $°R = K \times 9/5$). The "Low corrected fan tip speed" as disclosed herein according to one non-limiting embodiment is less than about 1150 ft / second (350.5 m/s). Further, the fan 42 may have 26 or fewer blades.

An exit area 400 is shown, in Figure 1 and Figure 2, at the exit location for the high pressure turbine section 54. An exit area for the low pressure turbine section is defined at exit 401 for the low pressure turbine section. As shown in Figure 2, the turbine engine 20 may be counter-rotating. This means that the low pressure turbine section 46 and low pressure compressor section 44 rotate in one direction, while the high pressure spool 32, including high pressure turbine section 54 and high pressure compressor section 52 rotate in an opposed direction. The gear reduction 48, which may be, for example, an epicyclic transmission (e.g., with a sun, ring, and star gears), is selected such that the fan 42 rotates in the same direction as the high spool 32. With this arrangement, and with the other structure as set forth above, including the various quantities and operational ranges, a very high speed can be provided to the low pressure spool. Low pressure turbine section and high pressure turbine section operation are often evaluated looking at a performance quantity which is the exit area for the turbine section multiplied by its respective speed squared. This performance quantity ("PQ") is defined as:

$$Equation\ 1: \quad PQ_{ltp} = (A_{lpt} \times V_{lpt}^{2})$$

$$Equation\ 2: \quad PQ_{hpt} = (A_{hpt} \times V_{hpt}^{2})$$

where $A_{lpt}$ is the area of the low pressure turbine section at the exit thereof (e.g., at 401), where $V_{lpt}$ is the speed of the low pressure turbine section, where $A_{hpt}$ is the area of the high pressure turbine section at the exit thereof (e.g., at 400), and where $V_{hpt}$ is the speed of the high pressure turbine section.

Thus, a ratio of the performance quantity for the low pressure turbine section compared to the performance quantify for the high pressure turbine section is:

$$Equation\ 3: \quad (A_{lpt} \times V_{lpt}^{2})/(A_{hpt} \times V_{hpt}^{2}) = PQ_{ltp}/\ PQ_{hpt}$$

In one turbine embodiment made according to the above design, the areas of the low and high pressure turbine sections are 557.9 $in^2$ (3599 $cm^2$) and 90.67 $in^2$ (585 $cm^2$), respectively. Further, the speeds of the low and high pressure turbine sections are 10179 rpm and 24346 rpm, respectively. Thus, using Equations 1 and 2 above, the performance quantities for the low and high pressure turbine sections are:

$$Equation\ 1: \quad PQ_{ltp} = (A_{lpt} \times V_{lpt}^{2}) = (557.9\ in^2)(10179\ rpm)^2 = 57805157673.9$$
$$in^2\ rpm^2\ (372.9 \times 10^9\ cm^2\ rpm^2)$$

$$Equation\ 2: \quad PQ_{hpt} = (A_{hpt} \times V_{hpt}^{2}) = (90.67\ in^2)(24346\ rpm)^2 =$$
$$53742622009.72\ in^2\ rpm^2\ (346.7 \times 10^9\ cm^2\ rpm^2)$$

and using Equation 3 above, the ratio for the low pressure turbine section to the high pressure turbine section is:

$$Ratio = PQ_{ltp}/\ PQ_{hpt} = 57805157673.9\ in^2\ rpm^2 / 53742622009.72\ in^2\ rpm^2 =$$
$$1.075$$

In another embodiment, the ratio was about 0.5 and in another embodiment the ratio was about 1.5. With $PQ_{ltp}/\ PQ_{hpt}$ ratios in the 0.5 to 1.5 range, a very efficient overall gas turbine engine is achieved. More narrowly, $PQ_{ltp}/\ PQ_{hpt}$ ratios of above or equal to about 0.8 are more efficient. Even more narrowly, $PQ_{ltp}/\ PQ_{hpt}$ ratios above or equal to 1.0 are even more efficient. As a result of these $PQ_{ltp}/\ PQ_{hpt}$ ratios, in particular, the turbine section can be made much smaller than in the prior art, both in diameter and axial length. In addition, the efficiency of the overall engine is greatly increased.

The low pressure compressor section is also improved with this arrangement, and behaves more like a high pressure compressor section than a traditional low pressure compressor section. It is more efficient than the prior art, and can provide more work in fewer stages. The low pressure compressor section may be made smaller in radius and shorter in length while contributing more toward achieving an overall pressure ratio design target of the engine.

In some examples, engine 20 is designed at a predetermined design target defined by performance quantities for the low and high pressure turbine sections 46, 54. In further examples, the predetermined design target is defined by pressure ratios of the low pressure and high pressure compressors 44, 52.

In some examples, the overall pressure ratio corresponding to the predetermined design target is greater than or equal to about 35:1. That is, after accounting for a pressure rise of the fan 42 in front of the low pressure compressor 44, the pressure of the air entering the low (or first) compressor section 44 should be compressed as much or over 35 times by the time it reaches an outlet of the high (or second) compressor section 52. In other examples, an overall pressure ratio corresponding to the predetermined design target is greater than or equal to about 40:1, or greater than or equal to about 50:1. In some examples, the overall pressure ratio is less than about 70:1, or more narrowly less than about 50:1. In some examples, the predetermined design target is defined at sea level and at a static, full-rated takeoff power condition. In other examples, the predetermined design target is defined at a cruise condition.

Figure 3 shows a mounting arrangement for an engine having the features as set forth above. With developments to the turbine sections, the shaft for driving the fan from the lowest pressure turbine has become increasingly thin and long.

In Figure 3, a higher pressure shaft 102 is shown supported by a forward bearing 116 mounted in some manner at 114. The shaft 102 is also mounted by a bearing 104 at a downstream location, and preferably through a mid-turbine frame 100. Mid-turbine frame 100 is shown to be intermediate a downstream end of the high pressure turbine 54, and an upstream end of the low pressure turbine 46. The mid-turbine frame 100 also mounts a bearing 108 supporting the lower pressure or fan driveshaft 106. A downstream end of the fan drive shaft 106 is supported in a bearing 112 that is mounted 113 within a turbine exhaust case 110. That is, the bearing mount 113 extends downstream of the low pressure turbine 46.

In known engines, the fan drive shaft 106 has been supported by two bearings mounted within the turbine exhaust case. With such an arrangement, a hub 115 limits the distance along the axis of the shaft 106 by which the two bearings may be spaced. In the prior art, these bearings must resist a critical speed of the fan drive or low pressure turbine section 46. The two bearings have not always been spaced by sufficient distance with such a mount.

By mounting the bearing 108 in the mid-turbine frame, and the downstream bearing 112 in the turbine exhaust case, a much wider "wheel base" is provided between the two bearings 108 and 112, and there is much better support to resist critical speed issues.

While Figure 3 shows this arrangement in an engine having two turbine sections, the features would apply equally to an engine having three turbine sections. In a three-turbine section engine, the mid-turbine frame would be between an intermediate turbine, and the lower pressure turbine. Further, in such an engine, the area and speed ratios as described above would also be true relative to the intermediate turbine section and the lowest pressure turbine section.

Although an embodiment has been disclosed, a worker of ordinary skill in the art would recognize that certain modifications would come within the scope of this invention. For that reason, the following claims should be studied to determine the true scope and content of this invention.

**Claims**

1. A turbine section (28) of a gas turbine engine (20) comprising:

   a first turbine section (46); and
   a second turbine section (54), wherein said first turbine section (46) has a first exit area (401) and rotates at a first speed, said second turbine section (154) has a second exit area (400) and rotates at a second speed which is faster than the first speed, a first performance quantity is defined as the product of the first speed squared and the first exit area (401), a second performance quantity is defined as the product of the second speed squared and the second exit area (400), a ratio of the first performance quantity to the second performance quantity is between 0.5 and 1.5, said first turbine section (46) is supported on two bearings (108, 112), with a first bearing (108) mounted in a mid-turbine frame (100) that is positioned intermediate said first turbine section (46) and said second turbine section (54), and a second bearing (112) mounting said first turbine section (46), with said second bearing (112) having a support (113) extending downstream of said first turbine section (46), and said second turbine section (54) has an inlet and is supported on a third bearing (104) aft of said inlet.

2. The turbine section (28) as set forth in claim 1, wherein said first turbine section (46) has between three and six stages, and said second turbine section (54) has between one and two stages, optionally wherein a pressure ratio across said first turbine section (46) is greater than 5:1.

3. A gas turbine engine (20) comprising:

   a fan (42) having one or more fan blades;
   a compressor section (24) in fluid communication with the fan (42); and
   a turbine section (28) in fluid communication with the compressor section (24), wherein the turbine section (28) includes a first turbine section (46) and a second turbine section (54), said first turbine section (46) has a first exit area (401) at a first exit point and rotates at a first speed, said second turbine section (54) has a second exit area (400) at a second exit point and rotates at a second speed which is faster than the first speed, a first performance quantity is defined as the product of the first speed squared and the first exit area (401), a second performance quantity is defined as the product of the second speed squared and the second exit area (400), a ratio of the first performance quantity to the second performance quantity is less than or equal to 1.5, said first turbine section (46) is supported on two bearings (108, 112), with a first bearing (108) mounted in a mid-turbine frame (100) that is positioned intermediate said first turbine section (46) and said second turbine section (54), and a second bearing (112) mounting said first turbine section (46), with said second bearing (112) supported in an exhaust case (110) downstream of said first turbine section (46), and said second turbine section (54) has an inlet and is supported on a third bearing (104) aft of the inlet.

4. The engine (20) as set forth in claim 3, wherein the compressor section (24) includes a first compressor section (44) and a second compressor section (52), the first turbine section (46) and the first compressor section (44) rotate in a first direction, and the second turbine section (54) and the second compressor section (52) rotate in a second opposed direction.

5. The engine (20) as set forth in claim 4, wherein a gear reduction (48) is included between said fan (42) and a low spool (30, 106) driven by the first turbine section (46) such that the fan (42) rotates at a lower speed than the first turbine section (46), and a gear ratio of said gear reduction (48) is greater than 2.3, optionally wherein said fan (42) rotates in the second opposed direction.

6. The engine (20) as set forth in claim 3, wherein each of said first and second turbine sections (46, 54) is configured to rotate in a first direction.

7. The engine (20) as set forth in any of claims 3 to 6, wherein said ratio is above or equal to 1.0.

8. The engine (20) as set forth in any of claims 3 to 7, wherein said fan (42) delivers a portion of air into a bypass duct, and a bypass ratio is defined as the portion of air delivered into the bypass duct divided by the amount of air delivered into the compressor section (24), with the bypass ratio being greater than 10.0.

9. The engine (20) as set forth in any of claims 3 to 8, wherein said fan (42) has twenty six or fewer fan blades, and said fan (42) defines a pressure ratio less than 1.45.

10. The engine (20) as set forth in any of claims 3 to 9, wherein said compressor section (24) includes a or the first compressor section (44) coupled to said first turbine section (46) and a or the second compressor section (52) coupled to said second turbine section (54), said first compressor section (44) including fewer stages than said second compressor section (52).

11. The turbine section (28) or engine (20) as set forth in any preceding claim, wherein said ratio is above or equal to 0.8.

12. The turbine section (28) or engine (20) as set forth in any preceding claim, wherein said third bearing (104) is situated in said mid-turbine frame (100).

13. The turbine section (28) or engine (20) as set forth in any preceding claim, wherein said first and third bearings (108, 104) are situated between said first and second exit areas (401, 400).

14. A method of designing a gas turbine engine (20), comprising:

providing a fan (42);
providing a compressor section (24) in fluid communication with the fan (42); and
providing a turbine section (28), including both a first turbine section (46) and a second turbine section (54), said first turbine section (46) supported on two bearings (108, 112), with a first bearing (108) mounted in a mid-turbine frame (100) that is positioned intermediate said first turbine section (46) and said second turbine section (54), and a second bearing (112) mounting said first turbine section (46), with said second bearing (112) supported in an exhaust case (110) downstream of said first turbine section (46), wherein said fan drive turbine section (46) has a first exit area (401) at a first exit point and is configured to rotate at a first speed, said second turbine section (54) has a second exit area (400) at a second exit point and is configured to rotate at a second speed which is faster than the first speed, a first performance quantity is defined as the product of the first speed squared and the first area (401) at a predetermined design target, a second performance quantity is defined as the product of the second speed squared and the second area (400) at the predetermined design target, and a ratio of the first performance quantity to the second performance quantity is between 0.5 and 1.5.

**EP 3 165 753 A1**

**15.** The method as set forth in claim 14, wherein:

the predetermined design target corresponds to a takeoff condition; and/or
said compressor section (24) includes a first compressor section (44) and a second compressor section (52), an overall pressure ratio is provided by the combination of a pressure ratio across said first compressor section (44) and a pressure ratio across said second compressor section (52) at the predetermined design target, and the overall pressure ratio is greater than or equal to 35.

8

FIG.1

FIG.2

FIG.3

Europäisches
Patentamt

European
Patent Office

Office européen
des brevets

# EUROPEAN SEARCH REPORT

**Application Number**

EP 16 19 6927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/078157 A1 (UNITED TECHNOLOGIES CORP [US]) 22 May 2014 (2014-05-22)<br>* claim 1 *<br>* figure 3 *<br>* entire description *<br>----- | 1-15 | INV.<br>F02K3/06<br>F02K3/072<br>F02C3/107<br>F02C7/06 |
| X | US 2015/192071 A1 (KUPRATIS DANIEL BERNARD [US] ET AL) 9 July 2015 (2015-07-09)<br>* the whole document *<br>----- | 1-15 | |
| A | US 2015/096303 A1 (SCHWARZ FREDERICK M [US] ET AL) 9 April 2015 (2015-04-09)<br>* the whole document *<br>----- | 1-15 | |
| A | WO 2010/119115 A1 (SNECMA [FR]; BART JACQUES RENE [FR]; ESCURE DIDIER RENE ANDRE [FR]; GA)<br>21 October 2010 (2010-10-21)<br>* abstract *<br>* figures *<br>----- | 1-15 | |

**TECHNICAL FIELDS SEARCHED (IPC)**

F02K
F02C

The present search report has been drawn up for all claims

| Place of search | Date of completion of the search | Examiner |
|---|---|---|
| The Hague | 23 March 2017 | Fortugno, Eugenio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 6927

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2017

| Patent document cited in search report | | Publication date | Patent family member(s) | | Publication date |
|---|---|---|---|---|---|
| WO 2014078157 | A1 | 22-05-2014 | CA | 2889618 A1 | 22-05-2014 |
| | | | EP | 2920445 A1 | 23-09-2015 |
| | | | JP | 2015536409 A | 21-12-2015 |
| | | | US | 2014130479 A1 | 15-05-2014 |
| | | | WO | 2014078157 A1 | 22-05-2014 |
| US 2015192071 | A1 | 09-07-2015 | NONE | | |
| US 2015096303 | A1 | 09-04-2015 | NONE | | |
| WO 2010119115 | A1 | 21-10-2010 | CA | 2758175 A1 | 21-10-2010 |
| | | | CN | 102395772 A | 28-03-2012 |
| | | | EP | 2419616 A1 | 22-02-2012 |
| | | | FR | 2944558 A1 | 22-10-2010 |
| | | | JP | 5710590 B2 | 30-04-2015 |
| | | | JP | 2012524203 A | 11-10-2012 |
| | | | RU | 2011146530 A | 27-05-2013 |
| | | | US | 2012017603 A1 | 26-01-2012 |
| | | | WO | 2010119115 A1 | 21-10-2010 |

EPO FORM P0459

For more details about this annex : see Official Journal of the European Patent Office, No. 12/82